(19)

Europäisches
Patentamt
European
Patent Office
Office européen
des brevets

(11) **EP 3 364 703 A1**

(12) **EUROPEAN PATENT APPLICATION**

(43) Date of publication:
**22.08.2018 Bulletin 2018/34**

(21) Application number: **17156682.1**

(22) Date of filing: **17.02.2017**

(51) Int Cl.:
**H04W 72/12** *(2009.01)*     **H04L 12/28** *(2006.01)*
**H04L 12/46** *(2006.01)*     **H04W 88/10** *(2009.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ABB Schweiz AG
5400 Baden (CH)**

(72) Inventors:
• **PANG, Zhibo
722 42 Västerås (SE)**
• **SCHMITT, Johannes
68526 Ladenburg (DE)**

(74) Representative: **Jin, Xiao-Hong
ABB AB
Intellectual Property
Forskargränd 7
721 78 Västerås (SE)**

(54) **COMMUNICATING WITH WIRELESS NODES OF AN AUTOMATION SYSTEM USING TWO COMMUNICATION PROTOCOLS**

(57)     The invention is concerned with a communication setting determining device (28, 30) in an automation system (10) for determining a first communication window for communication between a gateway (22) and a first group of wireless network nodes (13) using a first communication protocol (P1) and a second communication window for communication between the gateway and a second group of wireless network nodes (16, 18, 20) using a second communication protocol (P2), wherein the wireless nodes of the second group employ timing settings comprising active periods and an inactive period between two consecutive active periods. The communication setting determining device (28, 30) sets the first communication window based on the inactive period of one wireless node (16) in the second group and set the second communication window based on the active periods of all the wireless nodes (16, 18, 20) in the second group.

Fig. 1

EP 3 364 703 A1

**Description**

TECHNICAL FIELD

The invention relates to the communication between a gateway and a first and a second group of wireless network nodes of an automation system using two different communication protocols. The invention is more particularly concerned with a communication setting determining device in an automation system and an automation system as well as a method computer program and computer program product for determining in an automation system a first communication window for communication between a gateway and a first group of wireless network nodes using a first communication protocol and a second communication window for communication between the gateway and a second group of wireless network nodes using a second communication protocol.

BACKGROUND

Building/home automation devices are intended to enable energy efficient climate control, provide comfort and security to the residents of a house. SE 1500502 discloses a home automation system comprising such devices.
In a practical building automation system (BAS), the different wireless devices are typically battery powered or connected to an electrical grid. Because of this energy efficiency is not the top priority of these conventional wireless devices and the communication protocol used may therefore require a relatively high amount of power.
The latest technologies of low power sensors, processors, wireless transceivers, and energy harvesting devices have made Self-Powered Wireless Devices (SPWD) possible in practical BAS systems. In SPWD, the energy needed by the operations including sensing, processing and communication is harvested by the device itself through e.g. indoor solar cells, thermoelectric material, piezoelectric material, or radio energy harvester. Although the functionality is still limited by the self-harvested energy, the SPWD is of interest as complement of conventional mains-powered devices and battery-powered devices, because it can be realized fully maintenance-free (i.e. without changing battery) and cable-less (i.e. neither power supply cable nor communication cable). Some examples of such SPWD used in BAS are temperature and/or humidity sensor powered by indoor solar cell, ambient light sensor powered by indoor solar cell, radiator temperature sensor powered by thermoelectric material, press button sensor powered by piezoelectric material, air quality sensor powered by WiFi radio energy harvester, etc.
Moreover, the communication protocol supported by the SPWD (SPWD Protocol) is usually simpler than the protocol of the whole Wireless BAS (WBAS Protocol). To connect such SPWD into the WBAS, a gateway (SPWD Gateway) is typically needed to translate between the SPWD Protocol and WBAS Protocol. Since the major motivation of using the SPWD in BAS is to save the cost of cabling, battery and maintenance, the SPWD Gateway should also be cost-effective. Moreover, the communication distance of the SPWD is often quite short e.g. within a few meters, still caused by the limited energy for communication. Therefore the deployment density of SPWD Gateways is often comparable to that of BAS end devices. In this context, "cost-effective" means the cost of the SPWD Gateway must be comparable to the BAS end devices.
The conventional design of an SPWD Gateway requires two dedicated wireless communication circuits including radio chipsets, protocol processors, and necessary discrete components to run the SPWD Protocol and WBAS Protocol in parallel. Powerful enough main processor is also needed because it has to receive, decode, translate, and handover the packets between the two independent chipsets under the timing constrains of both protocols. Examples for such an SPWD Gateway are ZigBee-to-EnOcean gateway, Z-Wave-to-EnOcean gateway, WiFi-to-EnOcean gateway, etc. Usually the cost of such gateway is much higher than an end device in the BAS.
It is in many instances necessary to reduce the cost of the SPWD Gateway to the level of an ordinary WBAS end device. One way may be to re-use the ordinary WBAS end device hardware to realize the gateway by adding some software functionalities. However, in order for this to be done, it may be necessary to coordinate the timing of operations in the two protocols and avoid transmitting (Tx) or receiving (Rx) packets by the two protocols at the same time.
One reason for coordinating timing and avoiding simultaneous transmissions between the two communication protocols is thus to allow a single device to act as an SPWD gateway. However, there are also other reasons for coordinating the timing and avoiding simultaneous transmissions. As is mentioned above, the power levels used by the SPWDs may be much lower than the power used by the WBAS devices. SPWD devices may thus be interfered in a higher degree. The avoidance of such interference is another reason for coordinating communication.
There is therefore a need for addressing some or all of the above-mentioned problems.

SUMMARY

One object of the invention is to coordinate the timing and avoiding simultaneous transmissions between a gateway and two groups of wireless communication nodes using two different communication protocols.

The object is according to a first aspect achieved by a communication setting determining device in an automation system for determining a first communication window for communication between a gateway and a first group of wireless network nodes using a first communication protocol and a second communication window for communication between the gateway and a second group of wireless network nodes using a second communication protocol, wherein the wireless nodes of the second group employ timing settings comprising active periods and an inactive period between two consecutive active periods, the communication setting determining device being operative to:

set the first communication window based on the inactive period of one wireless node in the second group, and
set the second communication window based on the active periods of all the wireless nodes in the second group.

The object is according to a second aspect achieved through an automation system comprising a first group of wireless network nodes using a first communication protocol, a second group of wireless network nodes using a second communication protocol, a gateway and a communication setting determining device according to the first aspect for determining a first communication window for communication between the gateway and the first group of wireless network nodes and a second communication window for communication between the gateway and the second group of wireless network nodes.

This object is according to a third aspect achieved through a method for determining, in an automation system, a first communication window for communication between a gateway and a first group of wireless network nodes using a first communication protocol and a second communication window for communication between the gateway and a second group of wireless network nodes using a second communication protocol, wherein the wireless nodes of the second group employ timing settings comprising active periods and an inactive period between two consecutive active periods, the method comprising:

setting the first communication window based on the inactive period of one wireless node in the second group, and
setting the second communication window based on the active periods of all the wireless nodes in the second group.

The object is according to a fourth aspect also achieved through a computer program for determining, in an automation system, a first communication window for communication between a gateway and a first group of wireless network nodes using a first communication protocol and a second communication window for communication between the gateway and a second group of wireless network nodes using a second communication protocol, wherein the wireless nodes of the second group employ timing settings comprising active periods and an inactive period between two consecutive active periods, the computer program comprising computer program code which when run in a communication setting determining device, causes the communication setting determining device to:

set the first communication window based on the inactive period of one wireless node in the second group, and
set the second communication window based on the active periods of all the wireless nodes in the second group.

The object is according to a fifth aspect further achieved through a computer program product for determining, in an automation system, a first communication window for communication between a gateway and a first group of wireless network nodes using a first communication protocol and a second communication window for communication between the gateway and a second group of wireless network nodes using a second communication protocol, the computer program product being provided on a data carrier and comprising the computer program code according to the fourth aspect.

The invention according to the above-mentioned aspects has a number of advantages. It allows communication with the second group of wireless nodes without being interfered by the first group. This can also be achieved using only one transceiver. Thereby the gateway may be made smaller and simpler. It can also be implemented without modifying any communication standards.

It should be emphasized that the term "comprises/comprising" when use d in this specification is taken to specify the presence of stated features, integers, steps or components, but does not preclude the presence or addition of one or more other features, integers, steps, components or groups thereof.

BRIEF DESCRIPTION OF THE DRAWINGS

The invention will now be described in more detail in relation to the enclosed drawings, in which:

fig. 1 schematically shows a gateway in a home automation system connected to a first group of wireless network nodes as well as to a second group of wireless network nodes,
fig. 2 shows a block schematic of some functionality in a wireless node in the first group,

fig. 3 shows a block schematic of some functionality in a wireless node in the second group,

fig. 4 shows a block schematic of some functionality in a communication setting determining device provided for the gateway,

fig. 5 schematically shows a flow chart of method steps in a method of determining a first and second communication window according to a first embodiment being performed by the communication setting determining device,

fig. 6 schematically shows communication of the gateway and two wireless nodes in the first and second groups in relation to first and second communication windows according to a second embodiment,

fig. 7 schematically shows a number of method steps performed by the gateway and the wireless node in the first and second groups according to the second embodiment,

fig. 8 schematically shows communication of the gateway and the wireless nodes in the first and second groups in relation to the first and second communication windows according to a third embodiment,

fig. 9 schematically shows a number of method steps performed by the gateway and the wireless nodes in the first and second groups according to the third embodiment, and

fig. 10 schematically shows a computer program product in the form of a CD ROM disc with a computer program performing the functionality of the communication setting determining device.


DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards communication in an automation system involving a first and a second group of wireless network nodes, where the wireless nodes of the first group use a first communication protocol and the wireless nodes of the second group use a second communication protocol. The wireless communication network may with advantage be a wireless sensor and actuator network and the automation system may with advantage be a home automation system where building/home automation devices are provided to enable energy efficient climate control, provide comfort and security to the residents in a building or a home. The wireless communication network comprises different actuators and sensors for the building/home automation system.

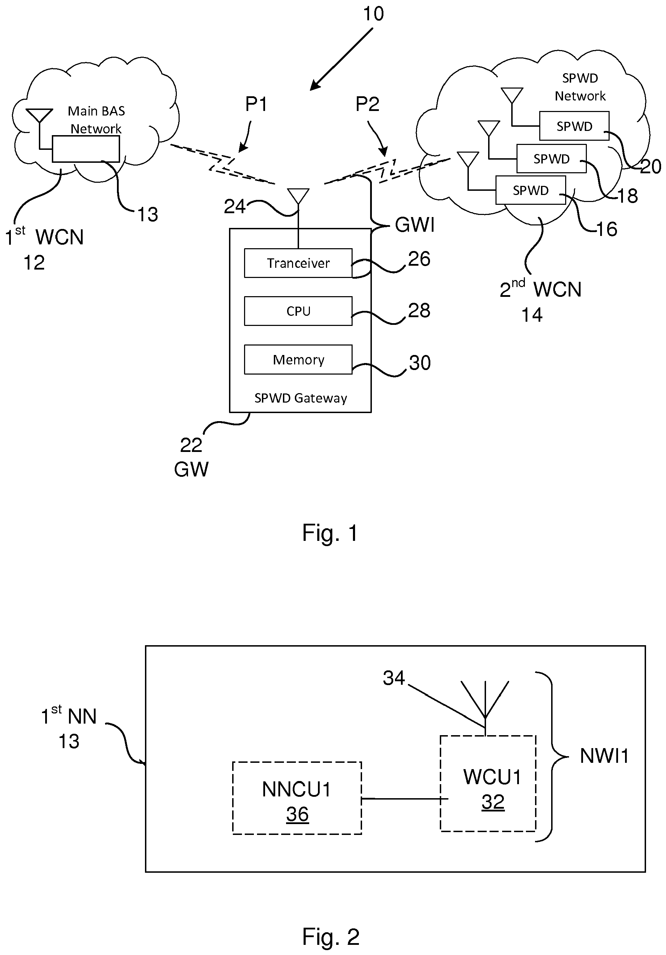

Fig. 1 schematically shows one such home automation system 10 including a first wireless communication network 1st WCN 12 comprising a first group of wireless network nodes and in which first wireless communication network 12 the first communication protocol P1 is used. In the example in fig. 1 the first group comprises a first wireless network node 13. The home automation system 10 also comprises a second wireless network 2nd WCN 14 comprising a second group of wireless network nodes 16, 18 and 20 that use the second communication protocol P2. In fig. 1 the second group comprises a second, third and fourth wireless network node 16, 18 and 20. The first wireless communication network 12 may comprise a main basic Automation System (BAS) where the wireless nodes are battery or grid powered, while the second wireless communication network 14 may be a self-powered wireless device (SPWD) network where at least one of the wireless nodes is self-powered. The first communication protocol P1 used by the first wireless network 12 may be a protocol where communication is predictable or synchronous, i.e. the transmissions take place with a known timing in a communication window that has been accepted or is predetermined and recognized by the wireless nodes and a counterpart, such as a gateway. The transmissions according to the second communication protocol P2 in the second wireless network 14 may also be predictable or synchronous. However, the transmissions according to the communication protocol P2 are not limited to being predictable. It is also possible that the communication is unpredictable or asynchronous, where the asynchronous communication may be event-triggered. The second communication protocol may need to be a short-range communication protocol. The first communication protocol P1 does not have to have the same limitation. The first communication protocol P1 may be a protocol in the group of ZigBee, Thread, 6LowPAN, etc. Examples of the second communication protocol are ZigBee Green Power and Bluetooth Low Energy (BLE).

The nodes in the two groups also communicate with a gateway GW 22 comprising and antenna 24, transceiver 26, processor 28, here in the form of a central processing unit (CPU) as well as a memory 30, where the transceiver 26 and antenna 24 together form a gateway interface GWI. As can be seen there is thus a single wireless interface GWI for communicating with both wireless networks 12 and 14. It should be realized that it is also possible that there are two wireless interfaces, one for each wireless communication network 12 and 14. It is also possible with a single wireless interface comprising one transceiver and two antennas.

It should also be realized that there may be more nodes in the first wireless communication network 12 and more or fewer nodes in the second wireless communication network 14. The nodes may perform sensor and actuator functions in the home or residential automation system and some nodes in the first wireless communication network 12 may perform control of one or more automation functions.

Fig. 2 shows a block schematic of some of the functionality of the first wireless network node 1st NN 13 in the first wireless communication network 12. The node 13 comprises a first wireless communication unit WCU132, which may be a radio circuit configured to communicate according to the first communication protocol and connected to an antenna 34, where the wireless communication unit 32 and antenna 34 together form a first network wireless interface NWI1. The radio circuit 32 is furthermore connected to a first network node control unit NNCU136 for providing data to be transmitted by and receiving data from the first network wireless interface NWI1. There may also be an energy source, such as a battery, providing energy for powering of the node. The nodes in the first communication network may more particularly be either battery powered or mains powered.

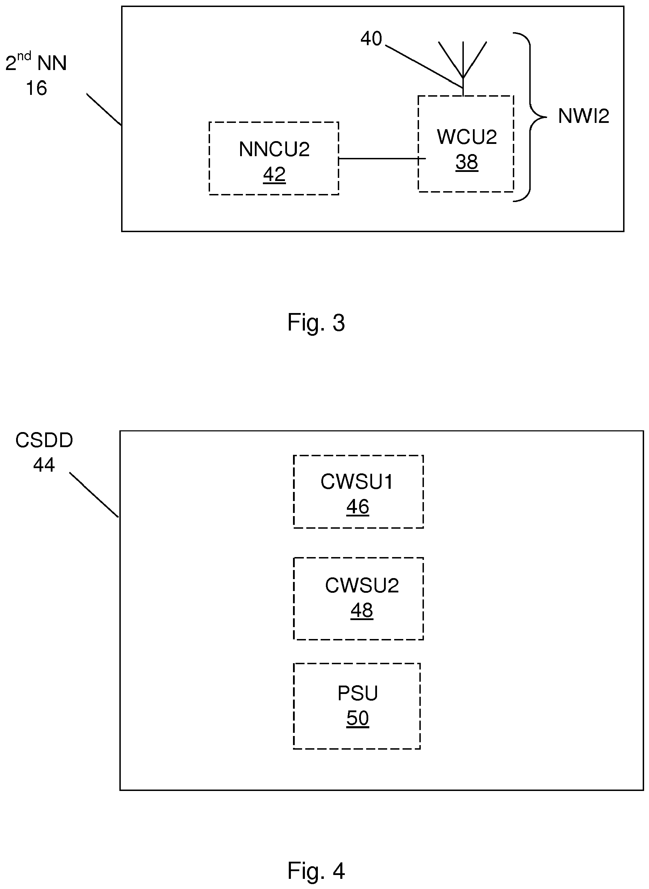

Fig. 3 shows a block schematic of some of the functionality in the second wireless network node 2nd NN 16 in the second wireless communication network 14. The second network node 16 comprises a second wireless communication unit WCU2 38, which may be a radio circuit configured to communicate according to the second communication protocol and connected to an antenna 40, where the second wireless communication unit 38 and antenna 40 together form a second network wireless interface NWI2. There is also a second network node control unit NNCU242, for providing data to be transmitted by and receiving data from the second network wireless interface NWI2. There may also be local power generating element providing self-harvested energy for powering of the node, where the node as an example may be solar cell powered, piezoelectrical material powered or thermo-electrical material powered.

The third and fourth wireless network nodes may be realized in a similar way as the second wireless network node 16.

Fig. 4 shows a block schematic of some functionality of a communication setting determining device 44. The communication setting determining device 44 may be a part of the gateway 22, in which case it may be provided through the combination of processor 28 and memory 30 of the gateway 22. However, it may also be provided as a separate device proving settings to be used by the gateway 22. In this case it may be provided as a separate computer communicating with the gateway 22, for instance using cable. The communication setting determining device 44 comprises a first communication window setting unit CWSU146, a second communication window setting unit CWSU248 and optionally also a protocol swapping unit 50.

As was mentioned above, the two wireless communication networks 12 and 14 may be provided for an automation system in a home or in a building, where sensors and actuators are nodes in the system communicating wirelessly.

Moreover, the wireless nodes 16, 18 and 20 in the second wireless network 14 may as was mentioned above comprise Self-Powered Wireless Devices (SPWD). In SPWD, the energy needed by the operations including sensing, processing and communication is harvested by the device itself through e.g. indoor solar cells, thermoelectric material, piezoelectric material, or radio energy harvester. The SPWD is very attractive as complement of conventional mains-powered devices and battery-powered devices, because it can be realized fully maintenance-free (i.e. without changing battery) and cable-less (i.e. neither power supply cable nor communication cable). Some examples of such SPWD used in BAS are temperature and/or humidity sensor powered by indoor solar cell, ambient light sensor powered by indoor solar cell, radiator temperature sensor powered by thermoelectric material, press button sensor powered by piezoelectric material, air quality sensor powered by WiFi radio energy harvester, etc.

However the second communication protocol P2 (SPWD Protocol) used in the second wireless communication network 14 is usually much simpler than the first communication protocol P1 (WBAS Protocol) of the whole Wireless BAS used in the first wireless communication network 12. To connect such SPWD into the WBAS, a gateway (SPWD Gateway) is needed to translate between the first and second protocols. The gateway 22 in fig. 1 is one such gateway. Since the major motivation of using the SPWS in BAS is to save the cost of cabling, battery and maintenance, the SPWD Gateway should be cost-effective. Moreover, the communication distance of the SPWD is often quite short e.g. within a few meters, still caused by the limited energy for communication. Therefore the deployment density of SPWD Gateways is often comparable to that of BAS end devices. In this context, "cost-effective" means the cost of the SPWD Gateway must be comparable to the BAS end devices.

The conventional design of a SPWD Gateway requires two dedicated wireless communication circuits including radio chipsets, protocol processors, and necessary discrete components to run the SPWD Protocol and WBAS Protocol in parallel. Powerful enough main processor is also needed because it has to receive, decode, translate, and handover the packets between the two independent chipsets under the timing constrains of both protocols. Examples for such a SPWD Gateway are ZigBee-to-EnOcean gateway, Z-Wave-to-EnOcean gateway, WiFi-to-EnOcean gateway, etc. Usually the cost of such gateway is much higher than an end device in the BAS.

It may be of interest to significantly reduce the cost of the Gateway to the level of normal WBAS end device. One way in which this may be done is to re-use the normal WBAS end device hardware to realize the gateway by adding some software functionalities. However, in order to make such a combination work, there may exist a need for coordinating the timing of operations in the two protocols and avoid transmitting (Tx) or receiving (Rx) packets by the two protocols at the same time.

It should be realized that the need for such coordination and avoidance of communication overlap is not limited to using a common transceiver, but may also be of interest in other situations, for instance in order to avoid that the communication made according to the second protocol P2 is interfered.

Aspects of the invention are directed towards such coordination and avoidance of communication overlap.

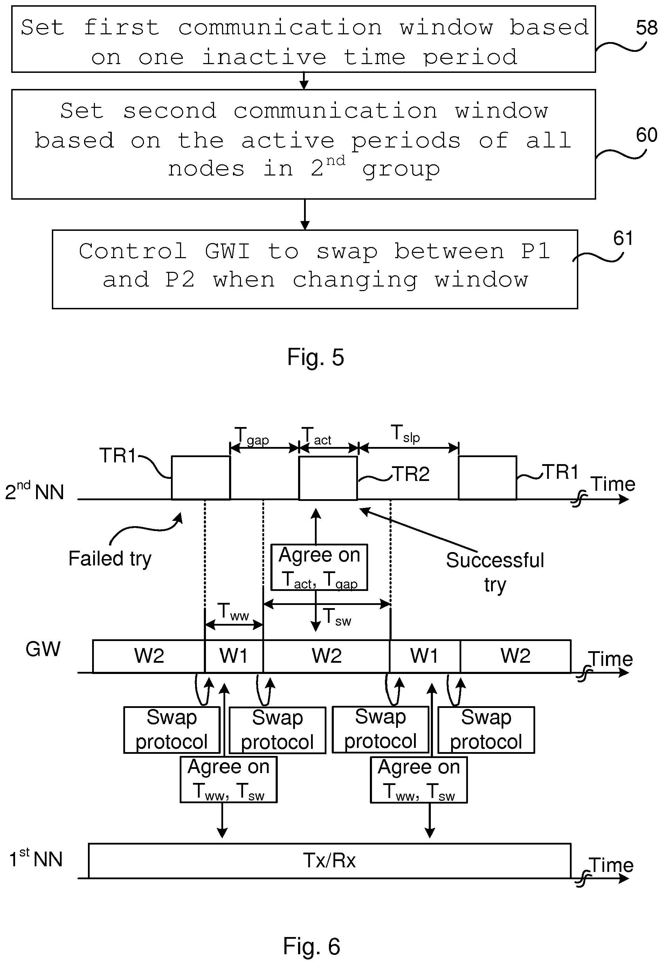

Now the operation of the communication setting determining device 44 according to a first embodiment of the invention will be described with reference also being made to fig. 5, which shows a flow chart of a number of method steps in a method of determining a first communication window for communication between the gateway 22 and the first group of wireless network nodes 13 using the first communication protocol P1 and a second communication window for communication between the gateway 22 and the second group of wireless network nodes 16, 18, 20 using the second communication protocol P2.

The method may involve the first communication window setting unit 46 setting or determining a first communication window in which the gateway 22 is to communicate with the first group of network nodes 13 and the second communication window determining unit 48 determining a second communication window when the gateway is to communicate with the second group of network nodes 16, 18 and 20.

Moreover, the second group of network nodes may transition between an active state and dormant state and they may have timing settings comprising defined or definable time periods when they are to be active or dormant. Aspects of the invention are directed towards using such timing settings of the second group of wireless nodes in order to determine both the first and the second communication window.

These timing settings may more particularly comprise an active period, when a wireless node is to be active and an inactive period between two consecutive active periods, where the corresponding wireless node is to be inactive or dormant.

There are a number of ways in which the communication setting determining device 44 may obtain the timing settings. The timing settings may be pre-determined and therefore the communication setting determining device 44 may have pre-knowledge about them. When the timing settings are pre-determined it is as an alternative possible that they may be communicated from the wireless nodes 16, 18 and 20 in the second group. It is also possible that the settings may be freely set in an allowable range in which case the communication setting determining device 44 may negotiate the settings with the wireless nodes 16, 18 and 20. The communication made according to the second communication protocol P2 may be predictable, in which case the timing of communications such as transmission and reception of data occur at pre-determined or negotiated points in time. Alternatively the communication may be event-triggered in which case the timing of communications performed according to the timing settings are linked to the occurrence of an event, such as if there is data to transmit.

In the method of the first embodiment, the first communication window setting unit 46 sets the first communication window based on one inactive period of a wireless node in the second group, step 58. It may as an example set the first communication window used for communication by the first wireless node 13 in the first wireless communication network 12 based on the inactive period of the second, third or fourth nodes 16, 18 and 20. In case they have different inactive time periods, the first communication window setting unit 46 may set the first communication window according to the inactive period that is the longest. It may also set the first communication window to be shorter than the inactive time period.

The second communication window setting unit 48 may in turn set the second communication window based on the active periods of all the wireless nodes 16, 18 and 20 in the second group, step 60. It may more particularly set the second communication window based on a sum of the active periods of all wireless nodes in the second group. In some variations the sum may also comprise the inactive periods of all the nodes in the second group.

Thereafter, once the windows have been set, the protocol swapping unit 50 may control the gateway interface GWI to swap between communication protocols when changing communication windows, step 61. This may involve the protocol swapping unit 50 ordering the gateway transceiver 26 to use the first communication protocol P1 for communication with the first group of wireless nodes 13 in the first communication window and order the gateway transceiver 26 to use the second communication protocol P2 for communicating with the second group of wireless nodes 16, 18 and 20 in the second communication window and thereby the transceiver swaps between the two protocols.

Thereby it is possible communicate with the second group of wireless nodes without being interfered by the first group. This can also be achieved using only one transceiver.

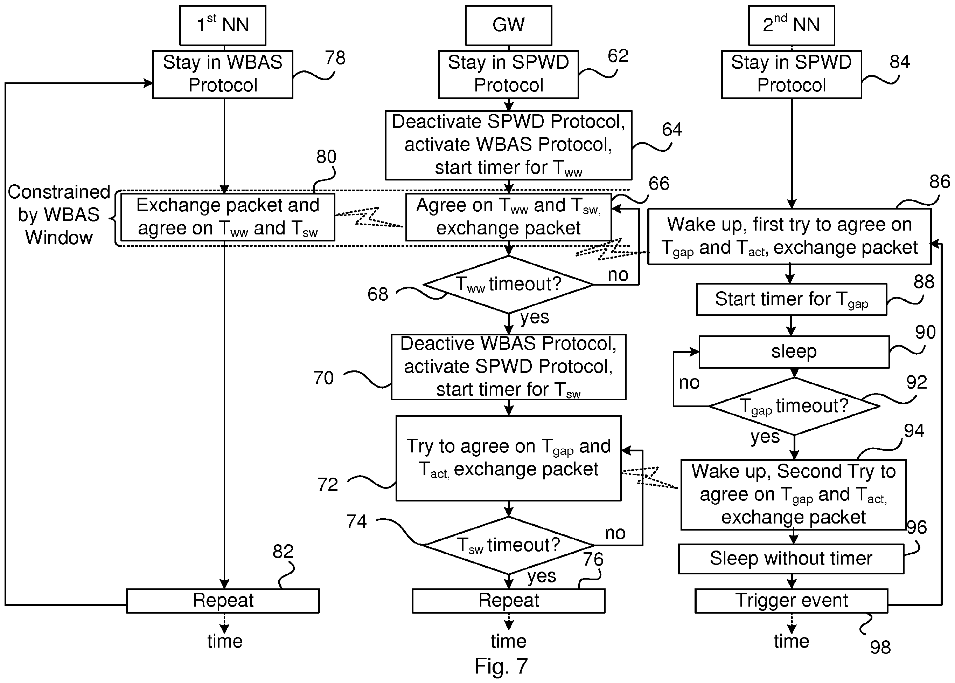

Now a second embodiment will be described with reference being made to fig. 6, which schematically shows communication of the gateway 22 and the wireless nodes 13 and 16 in the first and second groups in relation to the first and second communication windows, and to fig. 7 which schematically shows a number of method steps performed by the gateway 22 and the wireless nodes 13 and 16 in the first and second groups.

In the second embodiment, the communication setting determining device 44 is a part of the gateway 22 and communication in the second wireless communication network 14 is event-triggered. There is thus random traffic (SPWD-RT). The communication may in some cases also be referred to as being asynchronous. Event-controlled or event-triggered communication may be suitable for an SPWD with stronger but less durable energy source. Moreover, the description of the communication between the gateway 22 and the two wireless networks 12 and 14 will be limited to the communication between the gateway 22 and the first and second wireless nodes. The communication with other nodes in the network is similar.

The communication traffic of the second wireless node 16 is random (noted as SPWD-RT) from the system point-of-view, which means the wireless packet transmission is not predictable or determined by the Gateway 22. Examples of the SPWD-RT are switch button sensors and alarming sensors because the BAS as well as the Gateway 22 cannot predict when a button will be pressed by human or when an alarm will be triggered by an emergency case. In some extreme case, if the harvested energy is lower than a certain level e.g. to maintain a local timer, the behaviour of an SPWD where the communications are predictable - may become un-predictable, then it should be seen as SPWD-RT.

The Gateway 22 works as a node in the Main BAS Network, i.e. in the first communication network 12, following the WBAS Protocol, i.e. the first communication protocol P1. At the same time it works as a gateway in the SPWD Network, i.e. in the second communication network 14, following the SPWD Protocol, i.e. the second communication protocol P2. The WBAS Protocol P1 and SPWD Protocol P2 are in this example executed by the same CPU 28 sharing the same wireless Transceiver 26.

Moreover, the Main WBAS Network, i.e. the first wireless communication network 12, always works in the WBAS Protocol P1. It is always ready to receive a packet from the Gateway 22, so that the Gateway 22 can decide when to initiate the packet exchange with the Main WBAS Network 12. This can be realized by the so-called "polling" mechanism which has been supported by most of the existing standards like the IEEE802.15.4, ZigBee Green Power, and Thread Sleepy End Device. In polling, the packet exchange is always initiated by the child node (the Gateway 22 in this example) by sending a polling message to the parent node (the first wireless node 13 in the Main WBAS Network 12 in this example). If the parent node wants to send packet to the child node, it will notify this by replying to the polling message. After the child receives this reply, it is ready to receive packets from the parent node.

The SPWDs 16, 18 and 20 always work in the SPWD Protocol P2. An SPWD sleeps for an unpredictable duration of $T_{slp}$, and wakes up twice to try to exchange the packet(s), noted as First Try TR1 and Second Try TR2, respectively. Each try lasts for a duration or active period of Tact, and the SPWD 16 sleeps or is dormant for a predictable duration of $T_{gap}$ between the two tries. Thereby $T_{gap}$ is an inactive period between two active periods occurring in case the first try is unsuccessful. After a successful try, the SPWD is dormant for an unspecified time $T_{slp}$ until the occurrence of another first try TR1. In the design of SPWD, the $T_{slp}$ is with advantage maximized and Tact minimized in order to maximize the energy efficiency. One example implementation of the packet exchange is, the SPWD 16 sends a Bluetooth Low Energy beacon packet to the Gateway 22. It can repeat multiple times to ensure successful delivery.

The Gateway 22 swaps, under the control of the protocol swapping unit 50, alternatively between the SPWD Protocol P2 in the second communication window or SPWD Window W2 and the WBAS Protocol P1 in the first communication window or WBAS Window W1.

One key aspect of the second embodiment is to guarantee that at least one of the two tries TR1 and TR2 between the SPWD 16 and the Gateway 22 should occur within the SPWD Window W2, and at the same time guarantee that the packet exchange between the Gateway 22 and the Main WBAS Network 12 only occurs within the WBAS Window W1. This may be realized by the following steps:

the Gateway 22 negotiates with the second wireless node 16 to agree on the proper value of $T_{gap}$ and possibly also Tact,

the Gateway 22 negotiates with the Main WBAS Network 12 to agree on the proper value of $T_{ww}$, which is the duration of the WBAS window W1 and possibly also of $T_{sw}$, which is the duration of the SPWD window W2, and

the $T_{gap}$, $T_{act}$, $T_{sw}$ and $T_{ww}$ must meet the constraints given in formula (1) and (2), where N is the number of SPWD(s), i.e. number of wireless nodes in the second group.

$$T_{ww} < T_{gap} \tag{1}$$

$$T_{sw} > \sum_{N} \left( T_{act} + T_{gap} \right) \tag{2}$$

Thereby the duration $T_{sw}$ of SPWD window $W_2$ is set as the sum of the active time periods $T_{act}$ and the inactive time periods $T_{gap}$ of all the wireless nodes in the second group and where the inactive time period is the inactive time period after an unsuccessful communication attempt.

It is possible that the active time period Tact is not being negotiated, but fixed or set by the SPWD. It is also possible that the duration $T_{sw}$ of the SPWD window W2 is not negotiated but only set internally in the gateway using knowledge about $T_{ww}$, Tact and $T_{gap}$.

The operation can, with reference being made to fig. 7 be the following. The gateway 22 may initially be operating in the SPWD window W2 and then communicates with the second wireless network 14 using the SPWD protocol P2, step 62, until the end of the SPWD window W2. At the same time the first wireless node 13 operates according to the WBAS protocol, step 78, and the second wireless node 16 operates according to the SPWD protocol P2, step 84.

At the end of SPWD window W2, the protocol swapping unit 50 of the gateway 22 then deactivates the SPWD protocol P2, activates the WBAS protocol P1 and starts a timer for keeping track of the duration $T_{ww}$ of the WBAS window W1, step 64.

At this point in time also the first communication window setting unit 46 communicates with the WBAS network 12, here exemplified by the first network node 13, in order to agree on the time periods $T_{ww}$ and $T_{sw}$ used for the WBAS and SPWD windows W1 and W2 and thereafter the transceiver 26 exchanges packets with the WBAS network (wireless node 13), step 66.

Thereby also the WBAS network 12 (first wireless node 13) communicates with the gateway 22 in order to agree on the time periods $T_{ww}$ and $T_{sw}$ used for the WBAS and SPWD windows W1 and W2 and exchanges packets with the gateway 22, step 80, where this negotiation and packet transmission are constrained by or limited to being carried out in the WBAS window W1.

The protocol swapping unit 50 then investigates the $T_{ww}$ timer and continues exchanging packets (and possibly also agrees on $T_{ww}$ and $T_{sw}$) with the WBAS network 12, step 66, as long as the timer has not reached a timeout, step 68.

If during the time that the gateway is operating in the WBAS window W1, any wireless node in the second group, such as the second wireless node 16, wakes up and makes a first try TR1 to agree on $T_{gap}$ and $T_{act}$ and exchange packets with gateway 22, step 86, then this will fail as the gateway is not operating in the SPWD window W2. The second wireless node 16 will therefore start a sleeping timer for the sleeping time Tgap, step 88, and then go to sleep, step 90, where this sleeping timer should be such that it will timeout in the SPWD window W2.

When the $T_{ww}$ timer has reached a timeout, step 68, the protocol swapping unit 50 deactivates the WBAS protocol P1, activates the SPWD protocol P2 and starts a SPWD window timer for keeping track of the time $T_{sw}$ of the SPWD window W2, step 70.

At this point in time also the second communication window setting unit 48 communicates with the SPWD network 14, for instance the second network node 16, in order to agree on the time periods $T_{gap}$ and optionally $T_{act}$ and thereafter the transceiver 26 exchanges packets with the SPWD network 14, step 72.

The protocol swapping unit 50 then investigates the $T_{sw}$ timer and continues exchanging packets (and possibly also agrees on $T_{gap}$ and $T_{act}$) with the SPWD network 14, step 72, as long as the timer has not reached a timeout, step 74.

The above-mentioned activities depend on the wireless nodes waking up in the SPWD window. Therefore negotiations are made with any node that wakes up and tries to connect with the gateway 22.

In the example above, the second network node 16 that made a first try TR1 to connect to the gateway 22 will have its $T_{gap}$ counter reach timeout, step 92, and therefore this node 16 will wake up and make a second try TR2 to agree on $T_{gap}$ and $T_{act}$ and exchange packets with gateway 22, step 94, which will succeed, since the gateway is operating in the SPWD window W2.

Thereafter the second network node 16 will resume sleeping a time $T_{slp}$ without timer, step 96, until an event, which is triggered for instance by an alarm or user interaction, step 98, which will cause the second node to wake up and again make the first try, step 86.

When, in the gateway 22, the $T_{sw}$ timer has reached a timeout, step 74, the protocol swapping unit 50 repeats, step 76, the deactivation of the SPWD protocol P1, the activation of the SPWD protocol P2 and starting of the WBAS window timer for keeping track of the time $T_{ww}$ of the WBAS window W2, step 64.

In a similar manner the wireless nodes of the WBAS network 12 repeat, step 82, staying in the WBAS protocol, steps 78, and exchanging packets and agreeing on $T_{ww}$ and $T_{sw}$, step 80.

It can thereby be seen that at least one of the tries TR1 and TR2 is guaranteed to be transmitted in the SPWD window W2, while the WBAS traffic is limited to the WBAS window W1. Thereby the same transceiver can be used for both protocols while interference is reduced.

In a variation of the second embodiment, the second wireless node may be required to guarantee that the harvested energy is sufficient to perform packet exchange twice and maintain the local timer during the gap between these tries. The inactive time period $T_{gap}$ may thereby be set for the harvested energy to be sufficient to let the SPWD maintain a local timer and the active time periods Tact may be set to be sufficient for the harvested energy to let the SPWD perform packet exchange using locally harvested energy.

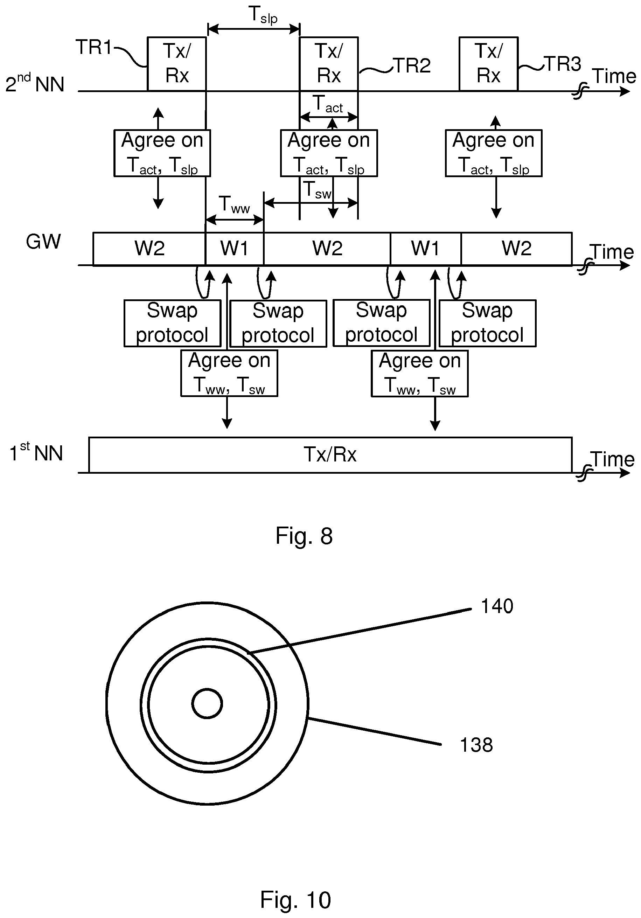

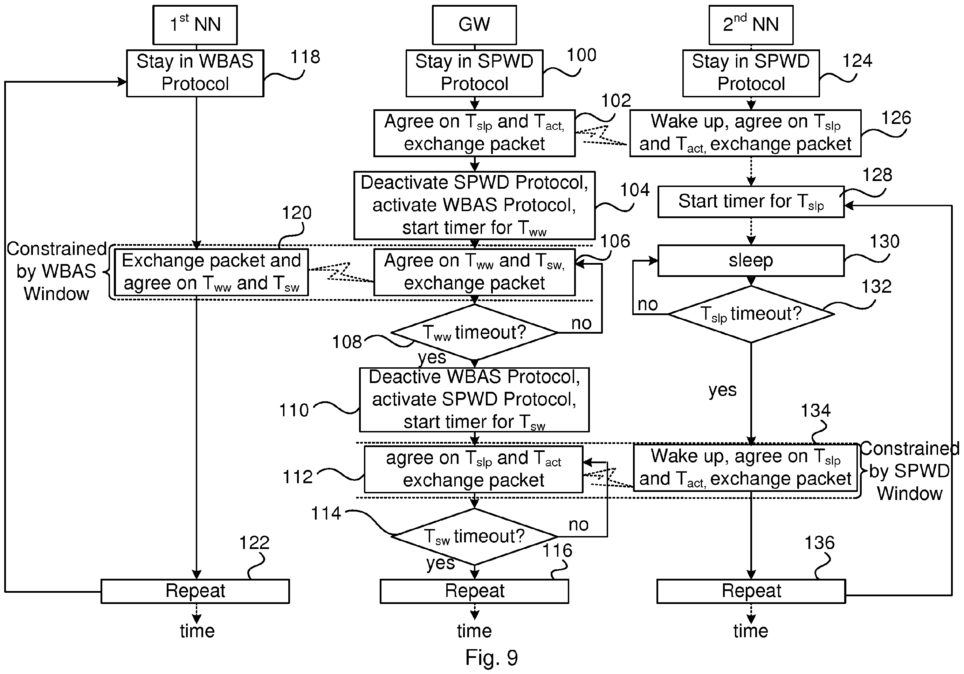

Now a third embodiment will be described with reference being made to fig. 8, which schematically shows communication of the gateway 22 and the wireless nodes 13 and 16 in the first and second groups in relation to the first and second communication window W1 and W2, and to fig. 9 which schematically shows a number of method steps performed by the gateway 22 and the wireless nodes 13 and 16 in the first and second groups.

In this embodiment, the communication setting determining device 44 is again a part of the gateway 22. However, the traffic of the SPWD is predictable (SPWD-PT). This type of operation is sometimes referred to as synchronous. The SPWD-PT may be more suitable for the SPWD with weaker but durable energy source.

Examples of the SPWD-PT are sensors of the building climate e.g. temperature, humidity, ambient light, and air quality. In most cases, the BAS reads the values of these sensors through gateway 22, regularly or on-demand, so the Gateway 22 knows when the next packet exchange will appear.

The Gateway 22 works as a node in the Main BAS Network 12 following in the WBAS Protocol P1 and at the same time works as the gateway in the SPWD Network 14 following the SPWD Protocol P2. The WBAS Protocol and SPWD Protocol may also in this case be executed by the same CPU 28 sharing the same wireless Transceiver 26.

The Main WBAS Network 12 always works in the WBAS Protocol P1. It is always ready to receive a packet from the Gateway 22, so that the Gateway 22 can decide when to initiate the packet exchange with the Main WBAS Network 12. This can also in this case be realized through polling.

The SPWDs 16, 18 and 20 always work in the SPWD Protocol P2. An SPWD, such as the second wireless node 16, sleeps for a duration of $T_{slp}$, and wakes up for a duration of Tact in order to allow the Gateway 22 to exchange packets with the second wireless node 16. Thereby there are active time periods comprising transmissions TR1, TR2, TR3, where two consecutive active time periods with transmissions for (to or from) an SPWD are separated by a predictable gap $T_{slp}$. It is also here possible that $T_{slp}$ is maximized and Tact minimized to maximize the energy efficiency. One example implementation of the packet exchange is that the SPWD 16 sends a Bluetooth Low Energy beacon packet to the Gateway 22.

The Gateway 22 swaps alternatively between the SPWD Protocol P2 in the SPWD Window W2 and the WBAS Protocol P2 in the WBAS Window W1.

One key aspect of the third embodiment may be to guarantee the packet exchange between the SPWD 16 and the Gateway 22 only occurs within the SPWD Window W2, and at the same time to guarantee that the packet exchange between the Gateway 22 and the Main WBAS Network 12 only occurs within the WBAS Window W1. This may be realized by the following steps:

the Gateway 22 negotiates with the SPWD 16 to agree on the proper value of $T_{slp}$ and possibly also Tact, the Gateway 22 negotiates with the Main WBAS Network 12 to agree on the proper value of $T_{ww}$, which also here is the duration of the WBAS window W1, and possibly also of $T_{sw}$, which again is duration of the SPWD window W2, the $T_{slp}$, Tact, $T_{sw}$ and $T_{ww}$ must meet the constraints given in formula (3) and (4), where N is the number of SPWD(s).

$$T_{ww} < T_{slp} \qquad\qquad (3)$$

$$T_{sw} > \sum_N T_{act} \qquad\qquad (4)$$

Also here, it is possible that the active time period Tact is not being negotiated, but fixed or set by the SPWD. It is also possible that the duration $T_{sw}$ of the SPWD window W2 is not negotiated but only set internally in the gateway using knowledge about $T_{ww}$ and $T_{act}$.

The operation may with reference being made to fig. 9 be the following. The gateway 22 may initially be operating in the SPWD window W2 and then communicates with the second wireless network 14 using SPWD protocol P2, step 100, until the end of the SPWD window W2. At the same time the first wireless node 13 operates according to the WBAS protocol, step 118, and the second wireless node 16 operates according to the SPWD protocol P2, step 124.

The first communication window setting unit 46 communicates with the SPWD network 14, here exemplified by the second network node 16, in order to agree on the time periods $T_{slp}$ and Tact and thereafter the transceiver 26 exchanges packets with the SPWD network 14 (wireless node 16), step 102.

Thereby also the SPWD network 14 (second wireless node 16) wakes up, communicates with the gateway 22 in order to agree on the time periods $T_{slp}$ and optionally also Tact used for the SPWD network and exchanges packets with the gateway 22, step 126.

This procedure may be carried out for all the wireless nodes in the SPWD network 14 and these may then furthermore be set to communicate with the gateway 22 in different parts of the SPWD window W2.

At the end of SPWD window W2, the protocol swapping unit 50 of the gateway 22 then deactivates the SPWD protocol P2, activates the WBAS protocol P1 and a starts a timer for keeping track of the time $T_{ww}$ of the WBAS window W1, step 104.

As this is done also the SPWD network 14, exemplified by the second wireless node 16, starts a sleeping timer for the time period $T_{slp}$, step 128, which timer is set to time out in the next SPWD window W2 and thereafter goes to sleep, step 130.

At this point in time also the first communication window setting unit 46 communicates with the WBAS network 12, here exemplified by the first network node 13, in order to agree on the time periods $T_{ww}$ and optionally also $T_{sw}$ used for the WBAS and SPWD windows W1 and W2 and thereafter the transceiver 26 exchanges packets with the WBAS network (wireless node 13), step 106.

Thereby also the WBAS network 12 (first wireless node 13) communicates with the gateway 22 in order to agree on the time periods $T_{ww}$ and $T_{sw}$ used for the WBAS and SPWD windows W1 and W2 and exchanges packets with the gateway 22, step 120, where this negotiation and packet transmission are constrained by or limited to being carried out in the WBAS window W1.

The protocol swapping unit 50 then investigates the $T_{ww}$ timer and continues exchanging packets (and possibly also agrees on $T_{ww}$ and $T_{sw}$) with the WBAS network 12, step 106, as long as the timer has not reached a timeout, step 108.

When the $T_{ww}$ timer has reached a timeout, step 108, the protocol swapping unit 50 deactivates the WBAS protocol P1, activates the SPWD protocol P2 and starts a SPWD window timer for keeping track of the time Tsw of the SPWD window W2, step 110.

At this point in time also the second communication window setting unit 48 communicates with the wireless nodes in the SPWD network 14, for instance the second network node 16, in order to agree on the time periods $T_{gap}$ and optionally Tact and thereafter the transceiver 26 exchanges packets with the SPWD network, step 112.

In the SPWD window W2, the sleep timer $T_{slp}$ of the wireless nodes in the second group, such as the second wireless node 16, should have timed out, step 132, and therefore these wireless nodes should also wake up, agree on the time periods $T_{slp}$ and optionally Tact with the gateway 22 and thereafter exchange packets with it, step 134, where this negotiation and packet transmission are constrained by or limited to being carried out in the SPWD window W2. Thereby the active time periods of all the wireless nodes in the second group coincide with the SPWD window W2.

In the gateway 22, the protocol swapping unit 50 then investigates the $T_{sw}$ timer and continues exchanging packets (and possibly also agrees on $T_{slp}$ and Tact) with the SPWD network 14, step 112, as long as the timer has not reached a timeout, step 114.

When the $T_{sw}$ timer has reached a timeout, step 114, the protocol swapping unit 50 repeats, step 116, the deactivation of the SPWD protocol P1, the activation of the SPWD protocol P2 and starting of the WBAS window timer for keeping track of the time $T_{ww}$ of the WBAS window W2, step 104.

In a similar manner the wireless nodes of the WBAS network 12 repeats, step 122, operation in the WBAS network, step 118, and exchange of packets and agree on $T_{ww}$ and $T_{sw}$, step 120. The SPWD network 14 repeats, step 136, starting of the sleep timer $T_{slp}$, step 128, sleeping, step 130, and monitoring the sleep timer timeout, step 132.

It can thereby be seen that the WBAS traffic is limited to the WBAS window W1 and the SPWD traffic is limited to the SPWD window W2. Thereby the same transceiver can be used for both protocols while interference is reduced.

As a variation of the third embodiment, an SPWD may be required to guarantee that the harvested energy is sufficient to maintain the local timer during the sleep, in addition to performing packet exchange. The inactive time period $T_{slp}$ may thereby set for the harvested energy to let the SPWD maintain a local timer and the active time periods Tact may be set for the harvested energy to be sufficient to let the SPWD perform packet exchange using locally harvested energy.

There are a number of further variations that may be made in both the second and third embodiment.

As an example, the negotiation between the SPWD and the Gateway can be realized like this: the SPWD transmits the desirable values of $T_{gap}$ or $T_{slp}$ and $T_{act}$ within the data packet to save energy, then the Gateway accepts these values. The negotiation process can be eliminated if the values are fixed and predefined during configuration phase of the BAS.

As another example, the negotiation between the Gateway and the Main BAS Network can be realized like this: the Gateway transmits the desirable values of $T_{sw}$ and $T_{ww}$. Then the Main BAS Network accepts these values. The negotiation process can also here be eliminated if the values are fixed and predefined during configuration phase of the BAS.

As a further variation, the $T_{sw}$ should be maximized and the $T_{ww}$, should be minimized to increase the reliability of the system, i.e. it is possible to give the SPWD higher priority to be served by the Gateway.

According to another variation, there may be a requirement that there must be sufficient margin in the timing made in the SPWD network to tolerate the error of timers caused by error of crystals oscillators, temperature, etc.

The invention has a number of advantages. It will make it possible to connect the SPWD devices into the home automation system without extra expensive gateways. Moreover, there is no need for modification of the existing standards of both WBAS Protocol and SPWD Protocol.

The communication setting determining device may be provided in the form of a processor with associated program memory including computer program code for performing the functionality of the communication setting determining device. A communication setting determining device may also be provided in the form of a digital signal processor (DSP), an application specific integrated circuit (ASIC) or a field-programmable gate array (FPGA).

A computer program may also be a computer program product, for instance in the form of a computer readable storage medium or data carrier, like a CD ROM disc or a memory stick, carrying such a computer program with the computer program code, which will implement the functionality of the above-described communication setting determining device when being loaded into a processor. One such computer program product in the form of a CD ROM disc 138 with the above-mentioned computer program code 140 is schematically shown in fig. 10.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the invention is only to be limited by the following claims.

**Claims**

1. A communication setting determining device (44) in an automation system (10) for determining a first communication window (W1) for communication between a gateway (22) and a first group of wireless network nodes (13) using a first communication protocol (P1) and a second communication window (W2) for communication between the gateway and a second group of wireless network nodes (16, 18, 20) using a second communication protocol (P2), wherein the wireless nodes of the second group employ timing settings comprising active periods ($T_{act}$) and an inactive period ($T_{gap}$; $T_{slp}$) between two consecutive active periods, the communication setting determining device (44) being operative to:

   set the first communication window (W1) based on the inactive period ($T_{gap}$; $T_{slp}$) of one wireless node (16) in the second group, and
   set the second communication window (W2) based on the active periods of all the wireless nodes (16, 18, 20) in the second group.

2. The communication setting determining device (44) according to claim 1, wherein the first communication window (W1) is set to be smaller than said inactive period of one wireless node in the second group.

3. The communication setting determining device (44) according to claim 1 or 2, being further operative to negotiate the first transmission window (W1) with at least one wireless node (13) in the first group.

4. The communication setting determining device (44) according to any previous claim, being further operative to negotiate the timing settings with the wireless nodes in the second group (16, 18, 20).

5. The communication setting determining device (44) according to any previous claim, wherein at least one wireless node (16) in the second group is a self-powered wireless device and the inactive time period is set to be sufficient to maintain a local timer and the active time periods are set to be sufficient to perform packet exchange using locally harvested energy.

6. The communication setting determining device (44) according to any previous claim, wherein the second communication protocol (P2) is a short-range communication protocol.

7. The communication setting determining device (44) according to any previous claim, wherein the communication according to the first protocol is synchronous.

8. The communication setting determining device (44) according to any previous claim, wherein the second communication window (W2) is based on a sum of the active periods (Tact) of all the wireless nodes in the second group.

9. The communication setting determining device (44) according to any previous claim, wherein the communication according to the second protocol (P2) is asynchronous and the occurrence of a first active period in the form of a first communication attempt (TR1) is event triggered and the inactive time periods comprise sleeping time periods ($T_{gap}$) between the first communication attempt (TR1) and a following second communication attempt (TR2) made if the first communication attempt is unsuccessful.

10. The communication setting determining device (44) according to claim 9, wherein the size of the second communication window (W2) is also based on the inactive time periods ($T_{gap}$) of all the wireless nodes in the second group.

11. The communication setting determining device (44) according to any of claims 1 - 8, wherein the communication according to the second protocol is synchronous and the active time periods comprise transmissions (TR1, TR2, TR3) set to coincide with the second communication window (W2) and the inactive time periods comprise sleeping time periods ($T_{slp}$) between two consecutive transmissions (TR1, TR2) for the wireless nodes in the second group.

12. An automation system (10) comprising a first group of wireless network nodes (13) using a first communication protocol (P1), a second group of wireless network nodes (16, 18, 20) using a second communication protocol (P2), a gateway (22) and a communication setting determining device (44) according to any previous claim for determining a first communication window (W1) for communication between the gateway (22) and the first group of wireless network nodes (13) and a second communication window (W2) for communication between the gateway and the second group of wireless network nodes (16, 18, 20).

13. A method of determining, in an automation system (10), a first communication window (W1) for communication between a gateway (22) and a first group of wireless network nodes (13) using a first communication protocol (PT1) and a second communication window (W2) for communication between the gateway (22) and a second group of wireless network nodes (16, 18, 20) using a second communication protocol (P2), wherein the wireless nodes of the second group employ timing settings comprising active periods (Tact) and an inactive period ($T_{gap}$; $T_{slp}$) between two consecutive active periods, the method comprising:

setting (58; 66; 106) the first communication window (W1) based on the inactive period ($T_{gap}$; $T_{slp}$) of one wireless node (16) in the second group, and
setting (60; 66; 106) the second communication window (W2) based on the active periods of all the wireless nodes (16, 18, 20) in the second group.

14. A computer program for determining, in an automation system (10), a first communication window (W1) for communication between a gateway (22) and a first group of wireless network nodes (13) using a first communication protocol (PT1) and a second communication window (W2) for communication between the gateway (22) and a second group of wireless network nodes (16, 18, 20) using a second communication protocol (P2), wherein the wireless nodes of the second group employ timing settings comprising active periods (Tact) and an inactive period ($T_{gap}$; $T_{slp}$) between two consecutive active periods, the computer program comprising computer program code (140) which when run in a communication setting determining device (44), causes the communication setting determining device (44) to:

set the first communication window (W1) based on the inactive period ($T_{gap}$; $T_{slp}$) of one wireless node (16) in the second group, and
set the second communication window (W2) based on the active periods of all the wireless nodes (16, 18, 20) in the second group.

15. A computer program product for determining, in an automation system, (10) a first communication window (W1) for communication between a gateway (22) and a first group of wireless network nodes (13) using a first communication protocol (PT1) and a second communication window (W2) for communication between the gateway (22) and a second group of wireless network nodes (16, 18, 20) using a second communication protocol (P2), said computer program product being provided on a data carrier (138) and comprising said computer program code (140) according to claim 14.

10

P1    P2

Main BAS
Network

SPWD
Network

SPWD

SPWD

SPWD

20

18

13

16

1st WCN
12

GWI

2nd WCN
14

24

Tranceiver — 26

CPU — 28

Memory — 30

SPWD Gateway

22
GW

Fig. 1

1st NN
13

34

NWI1

NNCU1
36

WCU1
32

Fig. 2

2ⁿᵈ NN
16

40

NWI2

NNCU2
42

WCU2
38

Fig. 3

CSDD
44

CWSU1
46

CWSU2
48

PSU
50

Fig. 4

| | |
|---|---|
| Set first communication window based on one inactive time period | 58 |

| | |
|---|---|
| Set second communication window based on the active periods of all nodes in 2$^{nd}$ group | 60 |

| | |
|---|---|
| Control GWI to swap between P1 and P2 when changing window | 61 |

Fig. 5

Fig. 6

Fig. 7

Fig. 8

Fig. 10

| 1st NN | | GW | | 2nd NN | |
|---|---|---|---|---|---|
| Stay in WBAS Protocol | 118 | Stay in SPWD Protocol | 100 | Stay in SPWD Protocol | 124 |

GW: Agree on $T_{slp}$ and $T_{act}$, exchange packet — 102

2nd NN: Wake up, agree on $T_{slp}$ and $T_{act}$, exchange packet — 126

GW: Deactivate SPWD Protocol, activate WBAS Protocol, start timer for $T_{ww}$ — 104

2nd NN: Start timer for $T_{slp}$ — 128

Constrained by WBAS Window — 120

1st NN: Exchange packet and agree on $T_{ww}$ and $T_{sw}$

GW: Agree on $T_{ww}$ and $T_{sw}$, exchange packet — 106

2nd NN: sleep — 130

$T_{ww}$ timeout? — 108 — no

$T_{slp}$ timeout? — 132 — no

yes

GW: Deactive WBAS Protocol, activate SPWD Protocol, start timer for $T_{sw}$ — 110

yes

agree on $T_{slp}$ and $T_{act}$ exchange packet — 112

2nd NN: Wake up, agree on $T_{slp}$ and $T_{act}$, exchange packet — 134

Constrained by SPWD Window

$T_{sw}$ timeout? — 114 — no — 116

yes

| Repeat | 122 | Repeat | | Repeat | 136 |
|---|---|---|---|---|---|
| time | | time | | time | |

Fig. 9

Europäisches
Patentamt

European
Patent Office

Office européen
des brevets

## EUROPEAN SEARCH REPORT

Application Number

EP 17 15 6682

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 232 607 B1 (MOBILIAN CORP [US]; ZEHAVI EPHRAIM [IL]; NEVO RON [US]) 28 September 2011 (2011-09-28) * paragraphs [0007] - [0009], [0014] - [0022], [0027] - [0034]; figures 1,2 * | 1-8, 11-15 | INV. H04W72/12 H04L12/28 H04L12/46 ADD. H04W88/10 |
| Y | EP 1 662 730 A1 (SAMSUNG ELECTRONICS CO LTD [KR]) 31 May 2006 (2006-05-31) * paragraphs [0017] - [0028]; figures 1,2 * | 1-8, 11-15 | |
| A | US 2006/292987 A1 (OPHIR LIOR [IL] ET AL) 28 December 2006 (2006-12-28) * paragraphs [0016] - [0022], [0031] - [0039]; figures 2,4 * | 1-15 | |

TECHNICAL FIELDS
SEARCHED      (IPC)

H04W
H04L

The present search report has been drawn up for all claims

| Place of search | Date of completion of the search | Examiner |
|---|---|---|
| Munich | 5 May 2017 | Itani, Maged |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 15 6682

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2017

| Patent document cited in search report | | | Publication date | Patent family member(s) | | | Publication date |
|---|---|---|---|---|---|---|---|
| EP 1232607 | | B1 | 28-09-2011 | AT | 526810 | T | 15-10-2011 |
| | | | | AU | 7736600 | A | 06-06-2001 |
| | | | | EP | 1232607 | A1 | 21-08-2002 |
| | | | | JP | 4718080 | B2 | 06-07-2011 |
| | | | | JP | 2004518308 | A | 17-06-2004 |
| | | | | US | 6990082 | B1 | 24-01-2006 |
| | | | | WO | 0135578 | A1 | 17-05-2001 |
| EP 1662730 | | A1 | 31-05-2006 | CN | 1780200 | A | 31-05-2006 |
| | | | | EP | 1662730 | A1 | 31-05-2006 |
| | | | | KR | 20060059003 | A | 01-06-2006 |
| | | | | US | 2006114866 | A1 | 01-06-2006 |
| US 2006292987 | | A1 | 28-12-2006 | EP | 1908175 | A2 | 09-04-2008 |
| | | | | US | 2006292987 | A1 | 28-12-2006 |
| | | | | WO | 2007002810 | A2 | 04-01-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 1500502